# EUROPEAN PATENT SPECIFICATION

(11) **EP 4 596 343 B1**
(45) Date of publication and mention of the grant of the patent: **12.08.2026**
(21) Application number: 24154709.0
(22) Date of filing: 30.01.2024
(51) Int. Cl.: B60T 8/36, B60T 15/04, B60T 17/04

(54) **AN ARRANGEMENT FOR MOUNTING AN EMERGENCY BRAKING SYSTEM TO A VEHICLE**
ANORDNUNG ZUR MONTAGE EINES NOTBREMSSYSTEMS AN EINEM FAHRZEUG
AGENCEMENT POUR MONTER UN SYSTÈME DE FREINAGE D'URGENCE SUR UN VÉHICULE

(43) Date of publication of application: 06.08.2025
(73) Proprietor: Volvo Autonomous Solutions AB, 405 08 Göteborg (SE)
(72) Inventor: Kumar, Vinaya, 421 35 Gothenburg (SE); Kanke, Ferdinand, 418 33 Gothenburg (SE)
(74) Representative: Kransell & Wennborg KB

(56) References cited:
- CN-A- 113 428 126
- DE-A1- 1 475 937
- DE-A1- 2 519 917
- US-A1- 2006 244 306

## Description

### TECHNICAL FIELD

The disclosure relates generally to a mounting arrangement for vehicle applications. In particular aspects, the disclosure relates to a mounting arrangement for mounting of an emergency braking system to a vehicle, to an emergency braking system, and to a vehicle, in particular an autonomous vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Autonomous vehicles are considered for use in many applications in which the vehicles are operated in a confined area, such as in a work site, a quarry, a harbor, etc., where there are no or few uncontrolled traffic participants. An autonomous vehicle must for safety reasons be equipped with an emergency brake system that can stop the vehicle during unforeseen emergency situations. However, for driving the vehicle along a public road, such as for transporting it to and from the confined area, it is desirable to provide a manual driving mode in addition to the autonomous driving mode. In the manual driving mode, when the vehicle is operated by a driver, the emergency brake system should be inactive to prevent sudden stops of the vehicle. The driver must therefore be able to easily switch off the emergency brake system in the manual driving mode.

CN 113 428 126 A discloses a hanging type air control valve installation device used in railway vehicle design, with a locking mechanism that cooperates with a hook structure, wherein the locking mechanism locks the hook structure, and front and rear protective covers are fixed on a mounting seat.

### SUMMARY

According to a first aspect of the disclosure, a mounting arrangement for mounting of an emergency braking system to a vehicle is provided. The mounting arrangement comprises:
- a bracket configured to mount a set of components, wherein the set of components comprise at least a backup brake valve arrangement and a manual valve for selectively enabling activation of the backup brake valve arrangement,
- a lid pivotably mounted to the bracket, wherein the lid is arranged to allow access to the manual valve mounted to the bracket when the lid is open, and wherein the lid is arranged to lock the manual valve to one of an open valve position and a closed valve position when the lid is closed,
wherein the bracket is configured as a protective cover at least partially enclosing the set of components when mounted thereto.

The first aspect of the disclosure may seek to provide an in at least some aspect improved mounting arrangement for mounting of an emergency braking system to a vehicle. A technical benefit may include an ability to protect the backup brake valve arrangement of the emergency braking system from environmental pollutants, while at the same time allowing an operator, such as a driver, to access the manual valve to enable and disable activation of the emergency braking system. Furthermore, since the lid is arranged to lock the manual valve to the selected valve position once the lid is closed, unintentional changes in the valve position, due to vibrations or similar, is prevented during driving.

The manual valve may be configured to selectively fluidly connect the backup brake valve arrangement to a compressed air source, such as to an air distribution device of the vehicle. The air distribution device may be configured to distribute and control flow of compressed air to various pneumatic systems of the vehicle, such as to the emergency braking system. Hence, by operating the manual valve, the operator can enable or disable activation of the emergency braking system.

Optionally in some examples, including in at least one preferred example, the mounting arrangement further comprises a handle configured to be assembled with the manual valve to enable opening and closing of the manual valve. A technical benefit may include facilitated operation of the manual valve. The handle may be configured for opening and closing of the valve by rotating the handle.

Optionally in some examples, including in at least one preferred example, the handle comprises a first engagement member configured to engage with at least one second engagement member of the lid to lock the manual valve. A technical benefit may include a robust locking of the manual valve to the lid in one of the valve positions, preferably in both valve positions. Preferably, two second engagement members are provided in the lid.

Optionally in some examples, including in at least one preferred example, the first engagement member is a male engagement member, and the at least one second engagement member comprises first and second through-holes configured for receiving the first engagement member in the open and closed valve positions, respectively. A technical benefit may include that an operator can easily see, just by looking at the lid, whether the manual valve is closed or opened. A visual indicator, such as a label or similar, may also be provided on the lid to guide the operator.

Optionally in some examples, including in at least one preferred example, the mounting arrangement further comprises first and second stopping members attached to the bracket and arranged to prevent movement of the handle beyond positions corresponding to the open and closed valve positions, respectively. The first and second stopping members restrict a range of motion of the handle such that it may only be moved between a first position corresponding to the open valve position and a second position corresponding to the closed valve position. A technical benefit may include facilitated operation of the manual valve.

Optionally in some examples, including in at least one preferred example, the mounting arrangement further comprises a set of sensors mounted to the bracket, wherein the set of sensors comprises a first sensor arranged to detect when the lid is closed. A technical benefit may include the possibility to use signals from the set of sensors to indicate a state of the emergency braking system. In particular, a signal from the first sensor may be used to indicate that the lid is closed and hence that the manual valve is set to one of its two valve positions.

Optionally in some examples, including in at least one preferred example, the first sensor is an inductive sensor. A technical benefit may include robust detection of the closed lid when the lid is metallic or comprises a metal member fixed to the lid.

Optionally in some examples, including in at least one preferred example, the set of sensors further comprises a second sensor configured to detect when the manual valve is in the open valve position and/or a third sensor configured to detect when the manual valve is in the closed valve position. A technical benefit may include the possibility to use signals from the second and/or third sensor to indicate to which valve position the manual valve is set, and hence whether a manual driving mode or an autonomous driving mode of the vehicle should be selected. Preferably, the mounting arrangement comprises the second and the third sensor such that both valve positions can be detected. The second and/or the third sensor may be an inductive sensor. In this case, the handle should be metallic or comprise a metallic component fixed thereto such that a sufficiently strong sensor signal is generated.

Optionally in some examples, including in at least one preferred example, the mounting arrangement further comprises a locking member, such as a latch, configured to releasably lock the lid in a closed lid position. A technical benefit may include that the lid can be secured in its closed position during driving, while it can be unlocked by the operator for operating the manual valve.

Optionally in some examples, including in at least one preferred example, in the closed valve position, the backup brake valve arrangement is inactive, and, in the open valve position, the backup brake valve arrangement is active. In the closed valve position, a fluid connection between the compressed air source and the backup brake valve arrangement is blocked. The manual valve is hence open for autonomous driving and closed for manual driving.

Optionally in some examples, including in at least one preferred example, the bracket comprises an open side, wherein the bracket is configured to be mounted with the open side toward a housing of an air distribution device of the vehicle. A technical benefit may include easy connection of pneumatic hoses and/or electrical connectors between the air distribution device and the backup brake valve arrangement and/or the sensors. Furthermore, by mounting the bracket right next to the housing of the air distribution device, it can be ensured that the distance between the backup brake valve arrangement and the air distribution device is sufficiently short to avoid pressure drop, thereby ensuring quick activation of the emergency brake system when needed.

Optionally in some examples, including in at least one preferred example, the mounting arrangement is configured to be mounted in a space provided between the housing of the air distribution device and a fuel tank of the vehicle. A technical benefit may include the provision of a sufficiently short distance between the air distribution system and the backup brake valve arrangement.

According to a second aspect of the disclosure, an emergency braking system of a vehicle is provided, comprising a backup brake valve arrangement, a manual valve for selectively activating the backup brake valve arrangement, and the mounting arrangement of the first aspect of the disclosure. The second aspect of the disclosure may seek to provide an in at least some aspect improved emergency braking system for a vehicle. A technical benefit may include the provision of an emergency braking system which is well protected from environmental pollutions but yet easily accessible to an operator to change driving modes of the vehicle.

Advantageous examples and further technical benefits of the second aspect appear from the above description of examples and technical benefits of the first aspect of the disclosure.

According to a third aspect of the disclosure, a vehicle comprising the emergency braking system according to the second aspect is provided. The vehicle may be a heavy-duty vehicle such as a bus, a truck, or a working machine. The vehicle may further comprise an air distribution device such as described above to which the backup brake valve arrangement is selectively fluidly connectable via the manual valve.

Optionally in some examples, including in at least one preferred example, the vehicle is configured to be operated in an autonomous driving mode when the backup valve arrangement is active, and in a manual driving mode when the backup brake valve arrangement is inactive. The mode may e.g. be set in response to receiving signals from the set of sensors described above in connection with the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** schematically illustrates an exemplary vehicle according to an example.
**FIG. 2** is a perspective view of a mounting arrangement according to an example.
**FIG. 3a** is a side view of the mounting arrangement in FIG. 2 with a closed lid.
**FIG. 3b** is a side view of the mounting arrangement in FIG. 2 with an open lid.
**FIG. 4** is a top view of the mounting arrangement in FIG. 2.
**FIG. 5** is a rear view of the mounting arrangement in FIG. 2.
**FIG. 6** is a front view of the mounting arrangement according to an example.

The drawings are schematic and not necessarily drawn to scale.

### DETAILED DESCRIPTION

The detailed description set forth below provides information and examples of the disclosed technology with sufficient detail to enable those skilled in the art to practice the disclosure.

Autonomous vehicles are useful for transports in confined areas where there are no or few uncontrolled traffic participants. An autonomous vehicle must for safety reasons be equipped with an emergency brake system that can stop the vehicle during unforeseen emergency situations. However, for driving the vehicle along a public road, such as for transporting it to and from the confined area, it is desirable to provide a manual driving mode in addition to the autonomous driving mode. In the manual driving mode, the vehicle is operated by a driver, and it is undesirable to have the emergency braking system active since this may lead to sudden stops of the vehicle. The driver should therefore be able to easily disable the emergency braking system in the manual driving mode. A manual valve may be used for this purpose. The manual valve should be located between an air distribution device of the vehicle, distributing compressed air to vehicle systems, and a backup brake valve arrangement used to actuate the brakes in case of emergency. The backup brake valve arrangement must however be possible to actuate quickly, and it should therefore be located as close as possible to the air distribution device to avoid pressure drops. This restricts the possibilities to position the manual valve where it can easily be accessed by the driver.

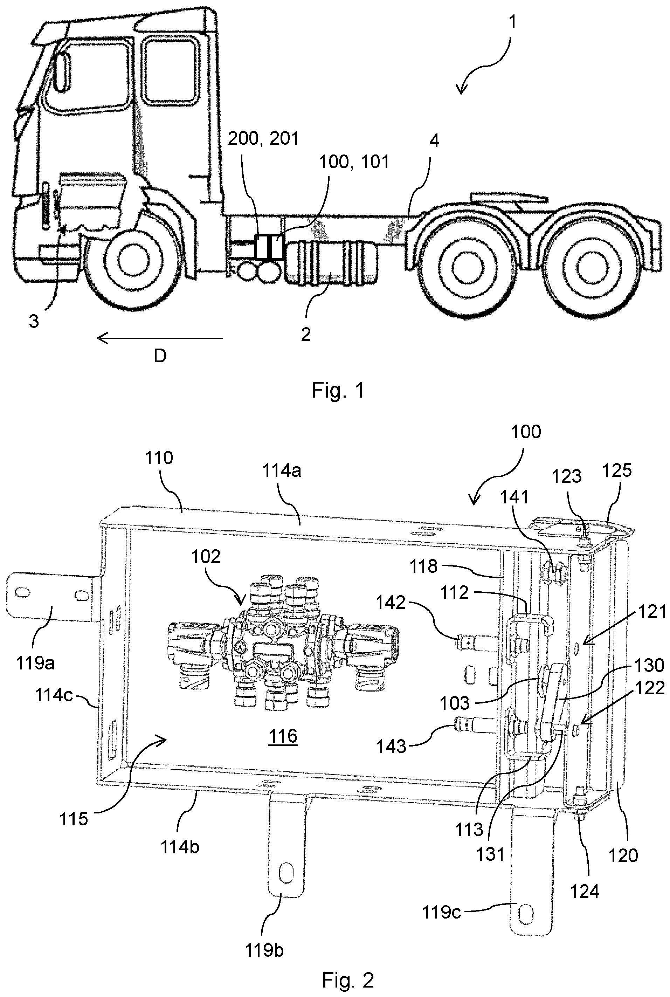

**FIG. 1** illustrates a vehicle 1 in the form of a heavy-duty truck being provided with an autonomous driving mode, i.e., a driverless driving mode, and a manual driving mode in which the vehicle is configured to be driven by a human driver. The vehicle 1 comprises an engine 3 providing propulsion power to drive the vehicle 1. A fuel tank 2 is mounted to a frame 4 of the vehicle 1. The vehicle 1 further comprises an emergency braking system 101 mounted to the vehicle 1 by means of a mounting arrangement 100, and an air distribution device 200 provided in a housing 201 mounted to the frame 4 of the vehicle 1, in front of the fuel tank 2 as seen in a forward driving direction D of the vehicle. The emergency braking system 101 is configured to be active in the autonomous driving mode and should be disabled in the manual driving mode. It is mounted in a space provided between the air distribution device 200 and the fuel tank 2.

**FIG. 2** illustrates a mounting arrangement 100 according to an example of the disclosure. The mounting arrangement 100 is configured for mounting of an emergency braking system 101 to a vehicle 1, such as illustrated in FIG. 1. It comprises a bracket 110 configured to mount a set of components of the emergency braking system 101. The bracket 110 is configured as a protective cover at least partially enclosing the set of components when the set of components is mounted thereto. The set of components includes at least a backup brake valve arrangement 102 and a manual valve 103 for selectively enabling activation of the backup brake valve arrangement 102, such as in the autonomous driving mode. The manual valve 103 is arranged to selectively provide a fluid connection between the air distribution device 200 and the backup brake valve arrangement. It is for this purpose movable between an open valve position and a closed valve position. Hoses and fittings (not shown) may be provided for providing fluid connections.

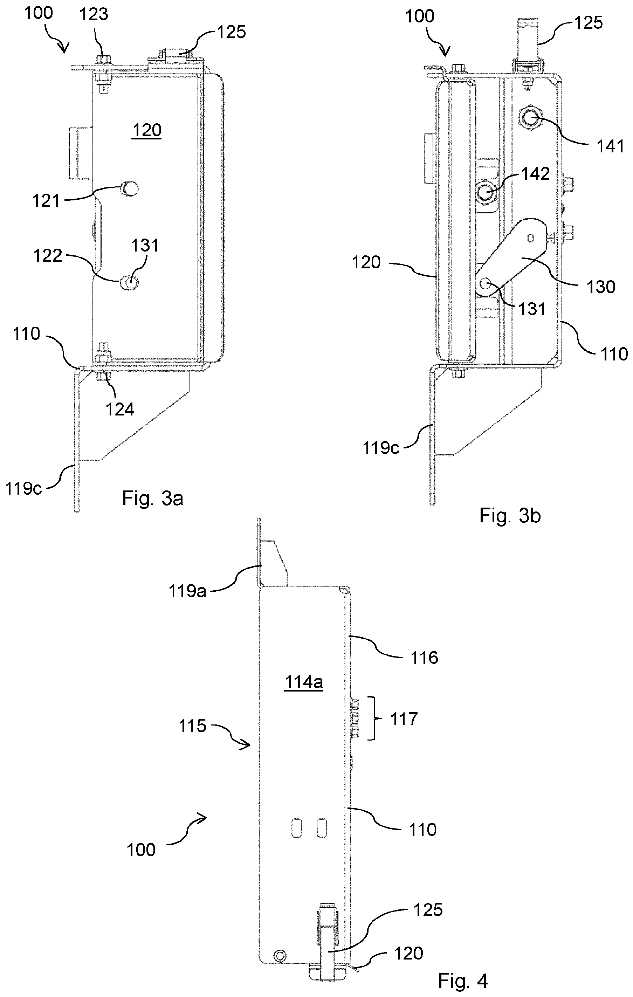

A lid 120 is pivotably mounted to the bracket 110 by means of connecting elements 123, 124. **FIGS. 3a** and **3b** illustrate the mounting arrangement 100 in a side view, with the lid 120 in a closed lid position and an open lid position, respectively. The lid 120 is arranged to allow access to the manual valve 103 mounted to the bracket 110 when the lid 120 is open. The lid 120 is further arranged to lock the manual valve 103 to one of an open valve position and a closed valve position when the lid 120 is closed. In the illustrated example, this is achieved by providing a handle 130 assembled with the manual valve 103 to enable opening and closing of the manual valve 103 by rotation of the handle 130. The handle 130 comprises a first engagement member 131 configured to engage with at least one second engagement member 121, 122 of the lid 120 to lock the manual valve 103. The first engagement member 131 may be a male engagement member, as in the illustrated example, and the at least one second engagement member may be a first and a second through-hole 121, 122 configured to receive the male engagement member 131 in the open and closed valve positions, respectively. However, other configurations are possible, such as providing the handle with a female engagement member and the lid with two male engagement members.

As best illustrated in FIG. 2, first and second stopping members 112, 113 arranged to prevent movement of the handle 130 beyond positions corresponding to the open and closed valve positions, respectively, are attached to the bracket 110. The first and second stopping members 112, 113 restrict a range of motion of the handle 130 such that it may only be moved between a first position corresponding to the open valve position and a second position corresponding to the closed valve position.

A set of sensors are further mounted to the bracket 110. The set of sensors comprises a first sensor 141 arranged to detect when the lid is closed, a second sensor 142 arranged to detect when the manual valve 103 is in the open valve position and a third sensor 143 configured to detect when the manual valve 103 is in the closed valve position. The first, second and third sensors 141, 142, 143 are in the illustrated example inductive sensors, although any kind of proximity sensors may be used. The male engagement member 131 of the handle 130 may be a steel element, or another metal element, that can easily be detected by means of the second and third sensors 142, 443 in the form of inductive sensors. The second and third sensors 142, 143 are mounted together with the first and second stopping members 112, 113, respectively. Hence, when the handle 130 reaches the first position corresponding to the open valve position, the second sensor 142 detects the male engagement member 131, and when the handle 130 reaches the second position corresponding to the closed valve position, the third sensor 143 detects it.

A locking member 125, herein in the form of a latch, is further provided. The locking member 125 is configured to releasably lock the lid 120 in a closed lid position as illustrated in FIG. 3a. The locking member is configured such that it can be released by the driver when he/she wants to open the lid 120 and gain access to the handle 130. **FIG. 4** illustrates the mounting arrangement 100 in a top view with the lid 120 closed and locked by the locking member 125.

In the illustrated example, the bracket 110 is provided with an open front side 115 and a rear wall 116. The open front side 115 is configured to be directed toward the housing 201 of the air distribution device 200. Hoses and other connections (not shown) may thereby easily be drawn between the air distribution device 200 and the emergency braking system 101 via the open front side 115 of the bracket 110. The bracket 110 further comprises upper and lower peripheral walls 114a, 114b as well as a first peripheral side wall 114c opposite to the lid 120. Attachment portions 119a, 119b, 119c configured for mounting of the bracket 110 to the housing 201 are also provided.

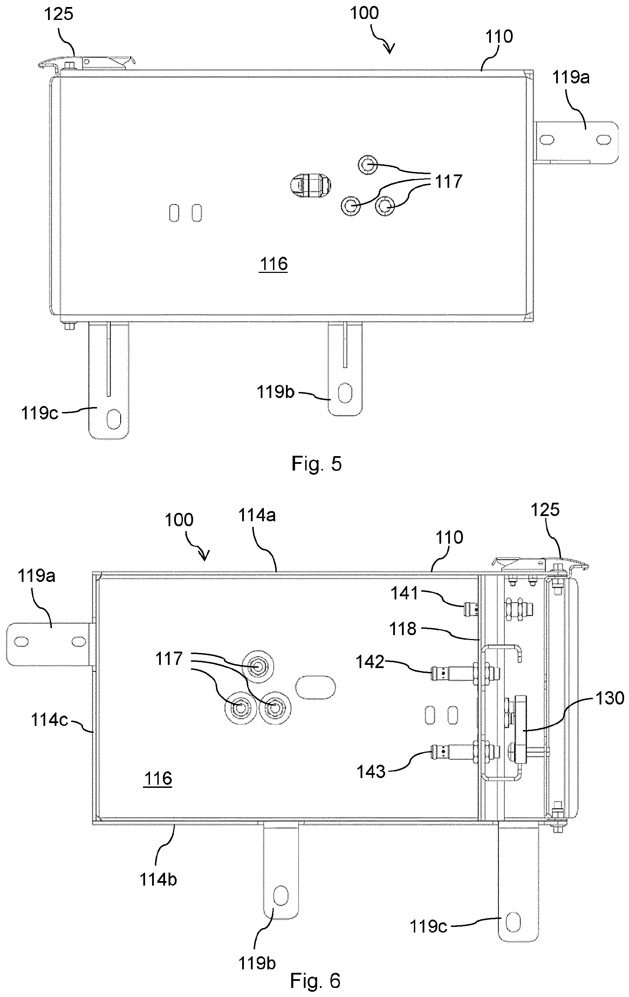

**FIG. 5****,** illustrates the mounting arrangement 100 in a rear view and **FIG. 6****,** shows a front view of the mounting arrangement 100 without the backup brake valve arrangement 102 mounted thereto. As illustrated herein, fastening members 117, such as screws, can be used for mounting the backup brake valve arrangement 102 to the rear wall 116.

The bracket 110 in the illustrated example further comprises an internal partition wall 118 to which the manual valve 103, the stopping members 112, 113 and the sensors 141, 142, 143 are mounted. The internal partition wall 118 covers and protects the backup brake valve arrangement 102 when the lid 120 is opened by the driver.

The bracket 110 and/or the lid 120 may be made of a metal material, such as aluminium, or of a plastic or composite material. In case inductive sensors are used, the lid 120 may comprise a metal element configured to be detectable by the first sensor 141, such as a steel element.

## Claims

1. A mounting arrangement (100) for mounting of an emergency braking system (101) to a vehicle (1), the mounting arrangement comprising:
- a bracket (110) configured to mount a set of components, wherein the set of components comprise at least a backup brake valve arrangement (102) and a manual valve (103) for selectively enabling activation of the backup brake valve arrangement (102),
- a lid (120) arranged to allow access to the manual valve (103) mounted to the bracket (110) when the lid (120) is open, **characterised in that** the lid (120) is pivotably mounted to the bracket (110) and wherein the lid (120) is arranged to lock the manual valve (103) to one of an open valve position and a closed valve position when the lid (120) is closed,
wherein the bracket (110) is configured as a protective cover at least partially enclosing the set of components when mounted thereto.

2. The mounting arrangement of claim 1, further comprising:
- a handle (130) configured to be assembled with the manual valve (103) to enable opening and closing of the manual valve (103).

3. The mounting arrangement of claim 2, wherein the handle (130) comprises a first engagement member (131) configured to engage with at least one second engagement member (121, 122) of the lid (120) to lock the manual valve (103).

4. The mounting arrangement of claim 3, wherein the first engagement member (131) is a male engagement member, and wherein the at least one second engagement member (121, 122) comprises first and second through-holes (121, 122) configured for receiving the first engagement member (131) in the open and closed valve positions, respectively.

5. The mounting arrangement of any one of claims 2-4, further comprising first and second stopping members (112, 113) attached to the bracket (110) and arranged to prevent movement of the handle (130) beyond positions corresponding to the open and closed valve positions, respectively.

6. The mounting arrangement of any one of the preceding claims, further comprising a set of sensors (141, 142, 143) mounted to the bracket (110), wherein the set of sensors (141, 142, 143) comprises a first sensor (141) arranged to detect when the lid (120) is closed.

7. The mounting arrangement of claim 6, wherein the first sensor (141) is an inductive sensor.

8. The mounting arrangement of claim 6 or 7, wherein the set of sensors (141, 142, 143) further comprises a second sensor (142) configured to detect when the manual valve (103) is in the open valve position and/or a third sensor (143) configured to detect when the manual valve (103) is in the closed valve position.

9. The mounting arrangement of any one of the preceding claims, further comprising a locking member (125), such as a latch, configured to releasably lock the lid (120) in a closed lid position.

10. The mounting arrangement of any one of the preceding claims, wherein, in the closed valve position, the backup brake valve arrangement (102) is inactive, and, in the open valve position, the backup brake valve arrangement (102) is active.

11. The mounting arrangement of any one of the preceding claims, wherein the bracket comprises an open side (115), and wherein the bracket (110) is configured to be mounted with the open side toward a housing (201) of an air distribution device (200) of the vehicle (1).

12. The mounting arrangement of claim 11, wherein the mounting arrangement (100) is configured to be mounted in a space provided between the housing (201) of the air distribution device (200) and a fuel tank (2) of the vehicle.

13. An emergency braking system (101) of a vehicle (1), comprising a backup brake valve arrangement (102), a manual valve (103) for selectively activating the backup brake valve arrangement (102), and the mounting arrangement (100) of any one of the preceding claims.

14. A vehicle (1) comprising the emergency braking system (101) of claim 13.

15. The vehicle according to claim 14, wherein the vehicle (1) is configured to be operated in an autonomous driving mode when the backup valve arrangement (102) is active, and in a manual driving mode when the backup brake valve arrangement (102) is inactive.

## Patentansprüche

1. Befestigungsanordnung (100) zum Befestigen eines Notbremssystems (101) an einem Fahrzeug (1), wobei die Befestigungsanordnung Folgendes umfasst:
- eine Halterung (110), die dazu konfiguriert ist, einen Satz von Komponenten zu befestigen, wobei der Satz von Komponenten mindestens eine Ersatzbremsventilanordnung (102) und ein manuelles Ventil (103) zum selektiven Ermöglichen der Aktivierung der Ersatz-Bremsventilanordnung (102) umfasst,
- einen Deckel (120), der so angeordnet ist, dass der den Zugang zum an der Halterung (110) befestigten manuellen Ventil (103) gestattet, wenn der Deckel (120) offen ist, **dadurch gekennzeichnet, dass** der Deckel (120) schwenkbar an der Halterung (110) befestigt ist, und wobei der Deckel (120) so angeordnet ist, dass er das manuelle Ventil (103) in einer von einer offenen Ventilposition und einer geschlossenen Ventilposition verriegelt, wenn der Deckel (120) geschlossen ist,
wobei die Halterung (110) als Schutzabdeckung konfiguriert ist, die den Satz von Komponenten mindestens teilweise umschließt, wenn sie daran befestigt ist.

2. Befestigungsanordnung nach Anspruch 1, ferner umfassend:
- einen Griff (130), der dazu konfiguriert ist, mit dem manuellen Ventil (103) montiert zu werden, um das Öffnen und Schließen des manuellen Ventils (103) zu ermöglichen.

3. Befestigungsanordnung nach Anspruch 2, wobei der Griff (130) ein erstes Eingriffselement (131) umfasst, das dazu konfiguriert ist, mit mindestens einem zweiten Eingriffselement (121, 122) des Deckels (120) in Eingriff zu gelangen, um das manuelle Ventil (103) zu verriegeln.

4. Befestigungsanordnung nach Anspruch 3, wobei das erste Eingriffselement (131) ein männliches Eingriffselement ist, und wobei das mindestens eine zweite Eingriffselement (121, 122) erste und zweite Durchgangslöcher (121, 122) umfasst, die dazu konfiguriert sind, das erste Eingriffselement (131) in der offenen bzw. der geschlossenen Ventilposition aufzunehmen.

5. Befestigungsanordnung nach einem der Ansprüche 2-4, die ferner ein erstes und ein zweites Anschlagelement (112, 113) umfasst, die an der Halterung (110) angebracht und so angeordnet sind, dass sie eine Bewegung des Griffs (130) über die Positionen hinaus verhindern, die der offenen bzw. der geschlossenen Ventilposition entsprechen.

6. Befestigungsanordnung nach einem der vorhergehenden Ansprüche, die ferner einen Satz von Sensoren (141, 142, 143) umfasst, die an der Halterung (110) befestigt sind, wobei der Satz von Sensoren (141, 142, 143) einen ersten Sensor (141) umfasst, der so angeordnet ist, dass er detektiert, wenn der Deckel (120) geschlossen ist.

7. Befestigungsanordnung nach Anspruch 6, wobei der erste Sensor (141) ein induktiver Sensor ist.

8. Befestigungsanordnung nach Anspruch 6 oder 7, wobei der Satz von Sensoren (141, 142, 143) ferner einen zweiten Sensor (142), der dazu konfiguriert ist, zu detektieren, wenn sich das manuelle Ventil (103) in der offenen Ventilposition befindet, und/oder einen dritten Sensor (143) umfasst, der dazu konfiguriert ist, zu detektieren, wenn sich das manuelle Ventil (103) in der geschlossenen Ventilposition befindet.

9. Befestigungsanordnung nach einem der vorhergehenden Ansprüche, die ferner ein Verriegelungselement (125), beispielsweise eine Sperrklinke, umfasst, das dazu konfiguriert ist, den Deckel (120) in einer geschlossenen Deckelposition lösbar zu verriegeln.

10. Befestigungsanordnung nach einem der vorhergehenden Ansprüche, wobei die Ersatzbremsventilanordnung (102) in der geschlossenen Ventilposition inaktiv ist und die Ersatzbremsventilanordnung (102) in der offenen Ventilposition aktiv ist.

11. Befestigungsanordnung nach einem der vorhergehenden Ansprüche, wobei die Halterung eine offene Seite (115) umfasst, und wobei die Halterung (110) dazu konfiguriert ist, mit der offenen Seite in Richtung eines Gehäuses (201) einer Luftverteilungsvorrichtung (200) des Fahrzeugs (1) befestigt zu werden.

12. Befestigungsanordnung nach Anspruch 11, wobei die Befestigungsanordnung (100) dazu konfiguriert ist, in einem zwischen dem Gehäuse (201) der Luftverteilungsvorrichtung (200) und einem Kraftstofftank (2) des Fahrzeugs vorgesehenen Raum befestigt zu werden.

13. Notbremssystem (101) eines Fahrzeugs (1), das eine Ersatzbremsventilanordnung (102), ein manuelles Ventil (103) zum selektiven Aktivieren der Ersatzbremsventilanordnung (102) und die Befestigungsanordnung (100) nach einem der vorhergehenden Ansprüche umfasst.

14. Fahrzeug (1), das das Notbremssystem (101) nach Anspruch 13 umfasst.

15. Fahrzeug nach Anspruch 14, wobei das Fahrzeug (1) dazu konfiguriert ist, in einem autonomen Fahrmodus betrieben zu werden, wenn die Ersatzventilanordnung (102) aktiv ist, und in einem manuellen Fahrmodus, wenn die Ersatzbremsventilanordnung (102) inaktiv ist.

## Revendications

1. Il est revendiqué un : 1. Agencement de montage (100) pour le montage d'un système de freinage d'urgence (101) sur un véhicule (1), l'agencement de montage comprenant :
- un support (110) configuré pour monter un ensemble de composants, l'ensemble de composants comprenant au moins un agencement de soupape de frein de secours (102) et une soupape manuelle (103) pour permettre sélectivement l'activation de l'agencement de soupape de frein de secours (102),
- un couvercle (120) agencé pour permettre l'accès à la soupape manuelle (103) montée sur le support (110) lorsque le couvercle (120) est ouvert, **caractérisé en ce que** le couvercle (120) est monté de manière à pouvoir pivoter sur le support (110) et que le couvercle (120) est agencé pour verrouiller la soupape manuelle (103) dans une position de soupape ouverte ou une position de soupape fermée lorsque le couvercle (120) est fermé,
le support (110) étant conçu comme un couvercle de protection entourant au moins partiellement l'ensemble de composants lorsqu'il est monté sur celui-ci.

2. Agencement de montage selon la revendication 1, comprenant en outre :
- une poignée (130) configurée pour être assemblée avec la soupape manuelle (103) pour permettre l'ouverture et la fermeture de la soupape manuelle (103).

3. Agencement de montage selon la revendication 2, dans lequel la poignée (130) comprend un premier élément d'engagement (131) configuré pour s'engager avec au moins un second élément d'engagement (121, 122) du couvercle (120) pour verrouiller la soupape manuelle (103).

4. Agencement de montage selon la revendication 3, dans lequel le premier élément d'engagement (131) est un élément d'engagement mâle, et l'au moins un second élément d'engagement (121, 122) comprend des premier et second trous traversants (121, 122) configurés pour recevoir le premier élément d'engagement (131) dans les positions de soupape ouverte et fermée respectivement.

5. Agencement de montage selon l'une quelconque des revendications 2 à 4, comprenant en outre des premier et seconds éléments d'arrêt (112, 113) fixés au support (110) et agencés pour empêcher le mouvement de la poignée (130) au-delà de positions correspondant aux positions de soupape ouverte et fermée respectivement.

6. Agencement de montage selon l'une quelconque des revendications précédentes, comprenant en outre un ensemble de capteurs (141, 142, 143) montés sur le support (110), l'ensemble de capteurs (141, 142, 143) comprenant un premier capteur (141) agencé pour détecter le moment où le couvercle (120) est fermé.

7. Agencement de montage selon la revendication 6, dans lequel le premier capteur (141) est un capteur inductif.

8. Agencement de montage selon la revendication 6 ou 7, dans lequel l'ensemble de capteurs (141, 142, 143) comprend en outre un deuxième capteur (142) configuré pour détecter lorsque la soupape manuelle (103) est dans la position de soupape ouverte et/ou un troisième capteur (143) configuré pour détecter lorsque la soupape manuelle (103) est dans la position de soupape fermée.

9. Agencement de montage selon l'une quelconque des revendications précédentes, comprenant en outre un élément de verrouillage (125), tel qu'un verrou, configuré pour verrouiller de manière dissociable le couvercle (120) dans une position de couvercle fermée.

10. Agencement de montage selon l'une quelconque des revendications précédentes, dans lequel, dans la position de soupape fermée, l'agencement de soupape de frein de secours (102) est inactif, et, dans la position de soupape ouverte, l'agencement de frein de secours (102) est actif.

11. Agencement de montage selon l'une quelconque des revendications précédentes, dans lequel le support comprend un côté ouvert (115), et le support (110) est configuré pour être monté avec le côté ouvert dirigé vers un logement (201) d'un agencement de distribution d'air (200) du véhicule (1).

12. Agencement de montage selon la revendication 11, dans lequel l'agencement de montage (100) est configuré pour être monté dans un espace prévu entre le boîtier (201) de l'agencement de distribution d'air (200) et un réservoir de carburant (2) du véhicule.

13. Système de freinage d'urgence (101) d'un véhicule (1), comprenant un agencement de frein de secours (102), une soupape manuelle (103) pour activer sélectivement l'agencement de soupape de frein de secours (102), et l'agencement de montage (100) selon l'une quelconque des revendications précédentes.

14. Véhicule (1) comprenant le système de freinage d'urgence (101) selon la revendication 13.

15. Véhicule selon la revendication 14, le véhicule (1) étant configuré pour fonctionner dans un mode de conduite autonome lorsque l'agencement de soupape de secours (102) est actif, et dans un mode de conduite manuel lorsque l'agencement de soupape de frein de secours (102) est inactif.
